(19) **Europäisches Patentamt / European Patent Office / Office européen des brevets**

(11) **EP 3 497 150 B1**

(12) **FASCICULE DE BREVET EUROPEEN**

(45) Date de publication et mention de la délivrance du brevet:
**19.08.2020 Bulletin 2020/34**

(21) Numéro de dépôt: **17754738.7**

(22) Date de dépôt: **21.07.2017**

(51) Int Cl.:
*C08H 99/00* (2010.01)   *C08L 91/00* (2006.01)

(86) Numéro de dépôt international:
**PCT/FR2017/052009**

(87) Numéro de publication internationale:
**WO 2018/029407 (15.02.2018 Gazette 2018/07)**

(54) **DISPERSIONS AQUEUSES D'ALKYDES AUX PERFORMANCES APPLICATIVES AMELIOREES EN RESISTANCE AU BLOCKING ET AU JAUNISSEMENT, EN DEVELOPPEMENT DE DURETE ET EN BRILLANT**

WÄSSRIGE ALKYDDISPERSIONEN MIT VERBESSERTEN ANWENDUNGSEIGENSCHAFTEN HINSICHTLICH DER RESISTENZ GEGEN BLOCKIERUNG UND VERGILBUNG, HÄRTEENTWICKLUNG UND GLANZ

AQUEOUS ALKYD DISPERSIONS WITH IMPROVED APPLICATION PERFORMANCES IN TERMS OF RESISTANCE TO BLOCKING AND YELLOWING, HARDNESS DEVELOPMENT AND SHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.08.2016 FR 1657707**

(43) Date de publication de la demande:
**19.06.2019 Bulletin 2019/25**

(73) Titulaire: **Arkema France
92700 Colombes (FR)**

(72) Inventeurs:
• **RIONDEL, Alain
77178 Saint Pathus (FR)**
• **HARLAY, Emilie
60700 Saint Martin Longueau (FR)**
• **KURCZAK, Michael
60140 Liancourt (FR)**
• **MAZAJCZYK, Jérôme
60610 La Croix Saint Ouen (FR)**
• **BEURDELEY, Patricia
95160 Montmorency (FR)**
• **CHAINEAU, Cécile
60130 Le Plessier Sur Saint Just (FR)**

(74) Mandataire: **Arkema Patent
Arkema France
DRD-DPI
420, rue d'Estienne d'Orves
92705 Colombes Cedex (FR)**

(56) Documents cités:
**WO-A1-2004/069933    WO-A1-2009/095569**

Remarques:
Le dossier contient des informations techniques présentées postérieurement au dépôt de la demande et ne figurant pas dans le présent fascicule.

**Description**

La présente invention concerne des émulsions d'alkydes, aussi appelées ici dispersions d'alkydes, qui ont des performances applicatives pour les revêtements obtenus, améliorées par rapport à ceux des émulsions d'alkydes commerciales servant de référence.

Plus particulièrement, l'invention vise à améliorer les performances de résistance au blocking, de résistance au jaunissement, de développement de dureté et au niveau du brillant de ladite émulsion selon l'invention, par rapport aux émulsions de référence, tout en lui assurant une stabilité au stockage pendant 1 mois à 50°C.

La présente invention concerne d'abord une dispersion aqueuse de résine alkyde à base d'acides gras à insaturation conjuguée et un tensio-actif particulier ayant des performances applicatives spécifiques concernant la résistance au blocking et au jaunissement, le développement de dureté et le brillant et ensuite un procédé spécifique d'obtention de cette dispersion et son utilisation, en particulier comme liant dans des compositions aqueuses de revêtements et plus particulièrement de revêtements décoratifs.

Le problème technique que la présente invention cherche à résoudre, par rapport à l'état de la technique, est de trouver un compromis de performances difficile par rapport à l'état de la technique qui consiste donc, comme exposé ci-haut, à une amélioration de la résistance au jaunissement, de la résistance au blocking, du développement de dureté au cours du séchage et du brillant du revêtement obtenu à partir de la dispersion aqueuse de la résine alkyde ayant une insaturation conjuguée spécifique et préparée en présence d'un tensio-actif spécifique, ceci sans nuire à sa stabilité au stockage, en particulier en assurant une stabilité au stockage à 50°C d'un mois.

Par le choix spécifique du taux d'insaturation conjuguée spécifique de la résine et par l'utilisation d'un tensio-actif phosphaté spécifique, en particulier un ester phosphate, plus particulièrement comprenant un monoester et un diester phosphate d'un alcool spécifique, la présente invention remédie aux inconvénients de l'état de la technique (besoin d'améliorations citées ci-haut) et permet l'obtention de dispersions aqueuses de résines alkydes avec les performances améliorées citées.

L'objet de la présente invention concerne donc d'abord une dispersion aqueuse d'au moins une résine alkyde obtenue en présence d'un tensio-actif phosphaté particulier.

Un second objet de l'invention concerne un procédé spécifique de préparation de ladite dispersion aqueuse de résine alkyde de l'invention.

Fait également partie de l'invention, une composition aqueuse de revêtement comprenant au moins une dispersion aqueuse de résine alkyde selon l'invention.

Un autre objet de l'invention est l'utilisation de la dispersion aqueuse de l'invention comme liant pour compositions aqueuses de revêtements, de préférence pour des compositions aqueuses de revêtements décoratifs et en particulier de peintures, de vernis ou de lasures.

Finalement, un dernier objet de l'invention concerne un revêtement qui résulte d'au moins une dispersion aqueuse de résine alkyde selon l'invention ou obtenue par le procédé selon l'invention.

La présente demande est définie conformément aux revendications annexes. Le premier objet de la présente invention concerne donc une dispersion aqueuse de résine alkyde, laquelle comprend :

a) une résine alkyde courte en huile ayant une viscosité Noury à 110°C selon méthode AFNOR XPT51213 allant de 7000 à 13000 mPa.s et de préférence de 9000 à 12000 mPa.s et comprenant dans son composant acide gras a1) au moins un monoacide gras polyinsaturé a11) ayant au moins deux insaturations par molécule et un taux en poids de monoacide a111) à insaturations conjuguées (monoacide conjugué) d'au moins 35%, de préférence d'au moins 42%, le taux en poids dudit monoacide gras a111) par rapport à ladite résine alkyde étant d'au moins 5%, de préférence de 5 à 40%, plus préférentiellement de 5 à 35%

b) au moins un tensio-actif anionique phosphaté, en particulier un alkyl alkoxy ester phosphate, plus particulièrement ledit tensio-actif b) étant un mélange de monoester et de diester phosphate, le groupement alkyl étant en $C_{10}$ - $C_{16}$ et alkoxylé avec 4 à 10 motifs alkoxy, de préférence lesdits motifs alkoxy étant choisis parmi les motifs éthoxy et/ou propoxy, plus préférentiellement étant des motifs éthoxy ; dans laquelle le taux en poids de ladite résine alkyde a) par rapport à ladite dispersion varie de 35 à 65%.

Une résine « alkyde courte en huile » signifie ici, selon l'invention, une résine alkyde ayant un taux en poids d'acide gras insaturé (en équivalent triglycéride) inférieur à 45%.

De préférence, la résine alkyde a) a une masse moléculaire moyenne en nombre Mn allant de 2500 à 6000 et plus préférentiellement de 3500 à 5000 mesurée par GPC dans le THF en équivalents polystyrène.

Selon un mode préféré de la dispersion, selon l'invention, ledit monoacide gras a11) est un produit de déshydratation de l'huile de ricin.

Comme exemples convenables de monoacides gras polyinsaturés a11) comprenant des monoacides conjugués selon a111), on peut citer le Nouracid® DE656, DE655, DE554, DE503, DZ453 (Acide gras de ricin déshydraté - Oleon), le Nouracid® HE456, HE305, HE304 (Acide gras de tournesol isomérisé - Oleon), le Nouracid® LE805 (Acide gras de lin isomérisé - Oleon), le Dedico® 5981 (Acide gras de ricin déshydraté - Croda), l'Isomergin® SK, SY, SF (Acide gras végétal isomérisé - Hobum Harburger Fettchemie Brinkcman & Mergell GmbH), le Pamolyn® 300, 380 (Acide linoléique isomérisé - Eastman) et comme préféré l'acide gras d'huile de ricin déshydraté.

Selon un autre mode particulier de la dispersion de l'invention, l'indice d'acide de ladite résine alkyde est inférieur à 25, de préférence inférieur à 15 et plus préférentiellement inférieur à 12 mg KOH/g.

Plus particulièrement, ledit tensio-actif b) est un ester phosphate d'un alcool en $C_{10}$ à $C_{16}$ qui est alkoxylé avec 4 à 10 motifs éthoxy, de préférence 4 à 8 motifs éthoxy.

Selon un mode particulier, ledit tensio-actif b) comprend un diester phosphate et, de préférence, un diester phosphate et un monoester phosphate dudit alcool (mélange de monoester phosphate et de diester phosphate).

Selon un autre mode particulier et préféré, ledit tensio-actif b) est un mélange de monoester phosphate et de diester phosphate et le rapport pondéral du monoester sur le diester phosphate est de 0,8 à 12. Plus particulièrement dans ce cas, ledit alcool est en $C_{12}$ à $C_{14}$, de préférence en $C_{13}$. Plus préférentiellement, le nombre desdits motifs alkoxy est de 4 à 8 et de préférence de 6 et plus préférentiellement, lesdits motifs sont éthoxy.

L'alcool en $C_{10}$ à $C_{16}$ est de préférence aliphatique et peut être linéaire ou ramifié.

Le taux en poids dudit tensio-actif b) par rapport à ladite dispersion peut varier de 1 à 3%, de préférence de 1,5 à 2,5% et plus préférentiellement de 1,8 à 2,2% en poids par rapport à la dispersion.

Le taux en poids de ladite résine alkyde a) par rapport à ladite dispersion peut varier de 40 à 60% et plus préférentiellement de 45 à 55%.

Selon un autre mode préféré plus particulier, ladite dispersion de l'invention peut comprendre en plus dudit tensio-actif b) un tensio-actif c) choisi parmi les tensio-actifs non ioniques et de préférence sélectionné parmi les tensio-actifs non ioniques polymères (qui sont des oligomères) avec, dans ce cas, un rapport en poids entre tensio-actif anionique b) et tensio-actif non ionique c), b) / c) allant de 1 à 3 et de préférence de 1,5 à 2,5.

Comme exemples préférés de tensio-actifs non ioniques convenables en tant que tensio-actifs c), on peut citer : les alcools gras en $C_{12}$-$C_{18}$ éthoxylés (2 à 35 EO), les alcools en $C_4$-$C_8$ propoxylés/éthoxylés avec un ratio pondéral propoxy/éthoxy de l'ordre de 1, l'alcool gras iso $C_{10}$ éthoxylé (2-40 EO), les alcools gras monobranchés éthoxylés en $C_{10}$-$C_{18}$ (2-40 EO), les esters de sorbitol en $C_{18}$, les esters de sorbitol éthoxylés (5-20 motifs EO) ou les acides gras en $C_{12}$-$C_{18}$ éthoxylés (7-100 EO), l'huile de ricin éthoxylée (30-40 EO), l'huile de ricin hydrogénée éthoxylée (7-60 EO), les esters gras comme : palmitate de glycérol, stéarate de glycérol, stéarate d'éthylène glycol, stéarate de diéthylène glycol, stéarate de propylène glycol, stéarate de polyéthylène glycol 200 (PEG de Mn = 200) ou les ester gras éthoxylé (2-15 EO) en $C_{18}$.

Le taux des tensio-actifs de type c) peut varier de 0,1 à 1% en poids par rapport à la dispersion.

Selon un autre mode possible de ladite dispersion de résine alkyde, ladite résine comprend dans son composant acide A) au moins un diacide ou anhydride carboxylique aromatique a2) et en option un monoacide carboxylique aromatique a3) et dans son composant alcool B) un polyol b1) de fonctionnalité allant de 3 à 6 et de préférence de 4. Plus préférentiellement, lesdits polyols sont aliphatiques.

Comme exemples convenables de polyacides carboxyliques ou anhydrides aromatiques a2) avec une fonctionnalité de 2 à 4 avec des fonctionnalités moyennes intermédiaires pouvant être obtenues par mélange d'au moins deux polyacides, on peut citer les acides ou anhydrides suivants pour les produits de fonctionnalité 2 : téréphtalique, isophtalique, phtalique, pour les produits de fonctionnalité 3 : acide et anhydride trimellitique et pour ceux de fonctionnalité 4 : l'anhydride pyromellitique.

Comme exemples convenables de monoacides carboxyliques aromatiques a3), on peut citer l'acide benzoïque et l'acide p-tertio-butyl benzoïque.

Comme exemples convenables de polyols b1) de fonctionnalité allant de 3 à 6, on peut citer les polyols suivants (par fonctionnalité) :

- trifonctionnels (triols) : triméthylol propane, glycérol, triméthylol éthane et de préférence le triméthylol propane
- tetrafonctionnels (tetrols) : ditriméthylol propane éther, pentaérhythritol et de préférence le pentaérythritol
- pentafonctionnels et hexafonctionnels : le dipentaérythritol (6), le polyglycérol (5-6) et le sorbitol (6).

Selon une autre option de ladite dispersion selon l'invention, ladite résine alkyde comprend en plus dans son composant acide gras a1) au moins un autre monoacide gras polyinsaturé a12) ayant au moins deux insaturations par molécule et comprenant au moins 90% en poids d'un monoacide a121) polyinsaturé non conjugué, de préférence issu de l'huile de soja, de tournesol ou de l'huile de tall (TOFA : huile d'acides gras de tall). Selon une option particulière, ladite alkyde comprend dans son composant acide gras a1) uniquement le monoacide a11) tel que défini ci-haut.

Le deuxième objet de l'invention concerne un procédé de préparation de la dispersion aqueuse selon l'invention, comme décrite ci-avant, lequel comprend les étapes successives suivantes :

i) Préparation de ladite résine alkyde a) en masse

ii) Mise à l'état fondu de ladite résine a)

iii) Addition dudit tensio-actif b) et éventuellement dudit tensio-actif non ionique c), comme défini ci-avant,

iv) Addition partielle d'eau,

avant

v) Neutralisation par une base, de l'acidité de a) et de b), de préférence ladite base étant sélectionnée parmi : LiOH, KOH, NaOH, $NH_4OH$ et amines tertiaires.

vi) Emulsification par inversion de phase avec ajustement de l'extrait sec après l'émulsification.

Comme exemples d'amines tertiaires, on peut citer la triéthylamine.

Plus particulièrement dans ledit procédé, l'étape ii) et iii) sont réalisées à une température allant de 80 à 100°C, l'étape iv) à une température allant de 80 à 65°C, l'étape v) à une température allant de 60 à 70°C et l'étape vi) à une température allant de 55 à 65°C.

La dispersion aqueuse de l'invention a de préférence une taille moyenne de particules allant de 50 à 500 nm et de préférence de 100 à 300 nm (par granulométrie laser), un extrait sec allant de 35 à 65%, de préférence de 40 à 60% et plus préférentiellement de 45 à 55%.

L'extrait sec est mesuré par la méthode ISO 3251.

La résine alkyde, selon l'invention, peut avoir un indice de OH allant de 20 à 150 mg KOH/g, de préférence de 30 à 100 mg KOH/g et une fonctionnalité moyenne f allant de 1,9 à 2,1. Cette fonctionnalité moyenne est définie suivant la relation suivante :

$$f = 2 \, \Sigma_i \, n_i f_i \, / \, \Sigma_i \, n_i$$

avec ni et fi étant respectivement le nombre de moles et fonctionnalité du composant acide ou alcool i (moyenne sur l'ensemble des composants réactifs acide et alcool).

Un autre objet, selon l'invention, concerne une composition de revêtement, laquelle comprend au moins une dispersion aqueuse telle que définie ci-avant selon l'invention, y compris dispersion telle qu'obtenue par le procédé défini ci-haut.

Plus particulièrement, ladite composition est une composition aqueuse de revêtements décoratifs, en particulier de peinture, de vernis ou de lasure, plus particulièrement une composition de peinture aqueuse.

Encore plus particulièrement, ladite composition de revêtements est une composition aqueuse de revêtements décoratifs et plus préférentiellement pour peintures, vernis ou lasures, encore plus préférentiellement pour peintures, vernis ou lasures de finition et plus particulièrement de finition intérieure ou extérieure pour bois, métal, mural ou plastique.

Un autre objet de l'invention concerne l'utilisation de la dispersion aqueuse de l'invention, comme définie ci-avant, y compris dispersion obtenue par le procédé tel que défini ci-haut, en tant que liant aqueux pour des compositions aqueuses de revêtements, de préférence pour des compositions aqueuses de revêtements décoratifs et plus préférentiellement pour peintures, vernis ou lasures, encore plus préférentiellement pour peintures, vernis ou lasures de finition et plus particulièrement de finition intérieure ou extérieure pour bois, métal, mural ou plastique.

Encore plus particulièrement, ladite utilisation concerne des peintures ayant, pour une CPV (Concentration Pigmentaire Volumique) de 18% et un agent siccatif à base de fer, une résistance au blocking inférieur à 2 selon méthode décrite au point 8 de « Test et méthodes utilisés » de la description, un développement de dureté Persoz après 14 jours d'au moins 100 s selon méthode ISO 1522 et une résistance au jaunissement selon ASTM 31396 inférieure à 2 après1 mois d'exposition à température ambiante et un brillant à 20° après 24 h (de séchage) supérieur à 93% selon méthode ISO 2813.

Finalement, la présente invention couvre un revêtement, de préférence revêtement de peinture, de vernis ou de lasure, qui résulte de l'utilisation d'au moins une dispersion aqueuse de l'invention comme définie ci-haut ou comme obtenue par un procédé tel que défini selon l'invention ci-avant.

Les exemples qui suivent illustrent l'invention et ses performances et ne limitent en rien sa portée.

## PARTIE EXPERIMENTALE

**1) Matières premières** (voir tableau 1 ci-dessous)

Tableau 1

| Nom | Nom chimique | Fonction technique | Caractéristiques |
|---|---|---|---|
| SOFA Nouracid® SZ 35 | Acide gras de soja (90% polyinsaturé a121) non conjugué) | a12 | Fonctionnalité 1 |
| Nouracid® DE 656 | Acide gras de ricin déshydraté (62% de polyinsaturé a111) | a11 | Fonctionnalité 1 |
| Acide benzoïque | Acide benzoique | a3 | Fonctionnalité 1 |
| Pentaérythritol | Pentaerythritol | b1 | Fonctionnalité 4 |
| Anhydride phtalique | Anhydride phtalique | a2 | Fonctionnalité 2 |
| LiOH 10% | Hydroxyde de Lithium en solution à 10% poids | Agent neutralisant (base) | |
| Tensio-actif alkyl alcoxylé phosphate (alkyl $C_{13}$, 6 OE), mono/di-ester = 0.8-1.2 | | Tensio-actif ionique b) | |
| Alcool en $C_4$-$C_8$ éthoxylé/propoxylé ratio OE/OP de 1 | | Tensio-actif non ionique c) | |

**2) Exemples**

2.1) Synthèse de l'alkyde **A** pour la dispersion **B** selon l'invention

Exemple 1

Dans un réacteur de 1,5 litres comportant :

- Une canne plongeante pour l'introduction d'azote,
- Une sonde de température,
- Un réfrigérant alimenté par de l'eau à 12°C,
- Un ballon pour récupérer l'eau issue de la réaction d'estérification

On charge 285 g d'acide gras de soja (SOFA) et 95 g de NOURACID® DE656, 265,9 g de pentaérythritol, 287,1 g d'anhydride phtalique et 166,3 g d'acide benzoïque. Sous bullage d'azote, l'ensemble est porté à 240°C par l'intermédiaire d'un chauffe ballon électrique et l'eau formée est distillée au fur et à mesure de sa formation jusqu'à obtenir un indice d'acide inférieur à 12. En fin de synthèse, on obtient une résine alkyde **A** visqueuse qui présente les caractéristiques suivantes :

- Indice d'acide : 11,5 mg KOH/g
- Extrait sec : 100%
- Viscosité Noury à 110°C selon méthode AFNOR XPT 51213 : 110000 mPa.s

2.2) Dispersion de l'alkyde **A,** pour obtenir la dispersion **B** selon l'invention

Exemple 2

Dans un réacteur de 1 litre, on introduit 477,1 g de résine alkyde **A** obtenus selon les conditions opératoires de l'exemple 1 décrit ci-dessus, préalablement fondus à 80 - 100°C. Lorsque la température du réacteur est stabilisée à 85°C, on introduit les deux tensio-actifs suivants : le tensio-actif phosphaté (19,7 g) et le tensio-actif non ionique qui est l'alcool en $C_4$-$C_8$ éthoxylé/propoxylé (9,7 g).

On laisse sous agitation pendant 30 minutes. On introduit ensuite pendant 30 minutes, 112 g d'eau et on refroidit le réacteur jusque 65°C. Puis, on introduit en 30 minutes, 55,3 g de LiOH à 10% pour neutraliser l'alkyde et le tensio-actif phosphaté. On laisse sous agitation pendant 30 minutes tout en refroidissant jusque 60°C. Enfin, on introduit en 2 heures, 345 g d'eau tout en maintenant la température à 60°C. Le réacteur est ensuite refroidi à température ambiante et l'extrait sec ajusté à 50%.

Au final, on obtient une émulsion **B** qui présente les caractéristiques suivantes :

- Extrait sec : 50%

- pH : 7,5

- Viscosité Brookfield à 23°C : < 100 mPas

- Taille des particules : < 200 nm

La stabilité au stockage à 50°C pendant 1 mois concernant la variation ou pas de l'extrait sec de l'émulsion **B**, selon l'invention, comparativement à un produit commercial de référence qui est la Synaqua® 4804 d'Arkema, est présentée au tableau 2 ci-dessous.

La stabilité au stockage à 50°C consiste à mesurer l'extrait sec en surface de l'échantillon et à le comparer avec l'extrait sec mesuré au fond de l'échantillon. Si après un mois de stockage à 50°C, l'écart d'extrait de sec mesuré n'est pas supérieur à 2%, la stabilité est considérée comme bonne.

Tableau 2

| Emulsion | Stabilité 50°C |
|---|---|
| Emulsion B selon invention | Bonne |
| Emulsion d'alkyde commerciale Synaqua® 4804 (Arkema) | Bonne |

Le jaunissement de l'émulsion **B** d'alkyde selon l'invention est également comparé à celui de la Synaqua® 4804. Les résultats obtenus sont rassemblés dans le tableau 3 ci-dessous.

Tableau 3

| Emulsion | Indice de jaunissement selon ASTM 313-96 | |
|---|---|---|
| | 1 mois à T°C ambiante | 1 mois à 50°C |
| Emulsion d'alkyde **B** invention | 8 | 18,7 |
| SYNAQUA® 4804 (comparatif) | 8,8 | 21,4 |

Les émulsions d'alkydes comparées ont été formulées dans une peinture brillante avec une concentration pigmentaire volumique (CPV) de 18% et avec une teneur en $TiO_2$ de 24% avec un agent siccatif à base de fer.

**Formulation utilisée** (voir tableau 4 ci-dessous)

Tableau 4

| Composant / Référence | Fonction | Parties en poids |
|---|---|---|
| Eau | | 141,6 |
| Acticide® MBS | Biocide | 2 |
| Disperbyk® 190 | Agent Dispersant | 6 |
| Byk® 022 | Antimousse | 1,5 |
| Tiona® 595 | Dioxyde de Titane | 240 |
| Dispersion Alkyde (à 50% Extrait Sec) | Liant | 562,7 |
| Borchi Oxy-Coat® 1101 | Siccatif à base de fer | 1,4 |

(suite)

| Composant / Référence | Fonction | Parties en poids |
|---|---|---|
| Coapur® 830W | Epaississant | 5,6 |
| Coapur® 2025 | Epaississant | 39,2 |

Caractéristiques calculées de la formulation n°1 (sans siccatif) :

- CPV = 18,2%

- Extrait sec en poids = environ 54%

- Extrait sec en volume = environ 41%

Les performances concernant la résistance au jaunissement, le développement de dureté, la résistance au blocking et le brillant de la formulation de la dispersion, selon l'invention, ont été comparées à celles de la formulation avec la Synaqua® 4804 au tableau 5 ci-dessous.

Tableau 5

| Formulation | Indice de jaunissement selon ASTM 313-96 | | Développement de dureté (s) | | Résistance au blocking | | Brillance à 20°/60° |
|---|---|---|---|---|---|---|---|
| | 1 mois à T°C ambiante | 1 mois à 50°C | 1 jour | 4 jours | 48 h de séchage, 24 h de contact T° ambiante | 48 h de séchage, 1h de contact, 50°C | 24 h à T°C ambiante |
| Peinture avec émulsion B d'alkyde | 1,7 | 8,3 | 63 | 106 | 1 | 1 | 94/97 |
| Peinture avec SYNAQUA® 4804 | 2,8 | 9 | 59 | 96 | 7 | 8 | 90/95 |

## TESTS ET METHODES UTILISES

Ces tests et méthodes sont valables en général pour les caractéristiques citées dans la description et en particulier dans les exemples présentés.

1) Extrait sec :

Evaluation suivant ISO 3251 selon les conditions : 1 g de dispersion pendant 1 heure à 125°C et le résultat est exprimé en %.

2) Viscosité :

Evaluation de la viscosité Noury à 110°C sur résine masse selon la norme AFNOR XPT 51213 et exprimée en mPa.s.
Evaluation de la viscosité Brookfield à 23°C, 10 rpm à l'aide des mobiles 2 et 3 sur un viscosimètre Brookfield RVDVE- 230 selon la norme ISO 2555.

3) Taille de particules :

La taille des particules est mesurées à l'aide d'un appareillage de type Zetasizer-Malvern Instruments Ltd.

L'échantillon de dispersion est dilué dans une cuve transparente à l'aide d'eau déionisée filtrée, la taille des particules étant mesurée par diffusion laser à 90°.

4) Indice d'acide et Indice d'hydroxyle :

L'indice d'acide est évalué suivant la norme ISO 3682.

L'indice d'hydroxyle est évalué suivant la norme NFT 30-403.

5) Dureté :

La dureté est évaluée à l'aide d'un pendule de dureté Persoz sur des films de 100 $\mu$m d'épaisseur humide appliqués sur plaques de verre après différents temps de séchage et selon la norme ISO 1522.

6) Jaunissement :

Appareillage du type Spectrocolorimètre « Dr Lange » Micro Color LMC.

Mesures de l'indice de jaunissement Yi (= « Yellowing Index ») selon la norme ASTM 313-96 sur films secs à différents temps de séchage.

Les films d'épaisseur humide 150 $\mu$m sont appliqués sur cartes Leneta à l'aide d'un filmographe Bird.

7) Brillant :

Les mesures sont effectuées à l'aide d'un brillancemètre « micro-TRI-gloss » de BYK Gardner GmbH à 20, après différents temps de séchage de films humides de 200 $\mu$m déposés sur plaques de verre et selon la norme ISO 2813.

8) Résistance au blocking :

Les peintures à évaluer sont appliquées sur deux cartes Leneta 2A à une épaisseur choisie, à l'aide d'un filmographe. Ces peintures sont stockées dans une salle climatisée (à 23°C $\pm$ 1°C et à 50% $\pm$ 5% HR) pendant un temps déterminé. Les faces peintes de ces cartes sont ensuite placées face à face entre 2 plaques de verre. L'ensemble est pressé par une masse permettant d'obtenir une pression de 50 g/cm$^2$ sur toute la surface d'essai. Les faces peintes sont laissées en contact en salle climatisée pendant un temps déterminé. A la fin du temps de contact, les cartes sont séparées délicatement en tirant sur les 2 cartes dans toutes les directions.

Les dommages occasionnés sur les films de peintures sont alors quantifiés sur une échelle variant de 0 à 8 selon indications données au tableau ci-dessous (avec 0 signifiant la meilleure performance et 8 la pire) :

Echelle d'évaluation de la résistance au blocking

| | |
|---|---|
| **0** | Aucune adhérence entre les films et aucun bruit lors de la séparation des cartes |
| **1** | Détachement des films avec un léger bruit, mais sans altération de la surface d'essai |
| **2** | Arrachement < à 10 points sur la surface d'essai |
| **3** | Arrachement < à 50 points sur la surface d'essai |
| **4** | Arrachement > à 50 points sur la surface d'essai |
| **5** | Arrachement de la surface < à 20% de la surface d'essai |
| **6** | Arrachement de la surface entre 20 et 50% de la surface d'essai |
| **7** | Arrachement de la surface > à 50% de la surface d'essai |
| **8** | Arrachement total de la surface d'essai |

**Revendications**

**1.** Dispersion aqueuse de résine alkyde, **caractérisée en ce qu'**elle comprend :

a) une résine alkyde courte en huile ayant une viscosité Noury à 110°C selon AFNOR XPT 51213 allant de 7000 à 13000 mPa.s et de préférence de 9000 à 12000 mPa.s et comprenant dans son composant acide gras a1) au moins un monoacide gras polyinsaturé a11) ayant au moins deux insaturations par molécule et un taux en poids de monoacide a111) à insaturations conjuguées d'au moins 35%, de préférence d'au moins 42%, le taux en poids dudit monoacide gras a111) par rapport à ladite résine alkyde étant d'au moins 5%, de préférence de 5 à 40%, plus préférentiellement de 5 à 35%

b) au moins un tensio-actif anionique phosphaté, en particulier un alkyl alkoxy ester phosphate, plus particulièrement ledit tensio-actif b) étant un mélange de monoester et de diester phosphate, le groupement alkyl étant en $C_{10}$ - $C_{16}$ et alkoxylé avec 4 à 10 motifs alkoxy, de préférence lesdits motifs alkoxy étant choisis parmi les motifs éthoxy et/ou propoxy, plus préférentiellement étant des motifs éthoxy ;

dans laquelle le taux en poids de ladite résine alkyde a) par rapport à ladite dispersion varie de 35 à 65%.

2. Dispersion aqueuse selon la revendication 1, **caractérisée en ce que** ledit monoacide gras a11) est un produit de déshydratation de l'huile de ricin.

3. Dispersion aqueuse selon la revendication 1 ou 2, **caractérisée en ce que** l'indice d'acide de ladite résine est inférieur à 25, de préférence inférieur à 15 et plus préférentiellement inférieur à 12 mg KOH/g.

4. Dispersion aqueuse selon l'une des revendications 1 à 3, **caractérisée en ce que** ledit tensio-actif b) est un ester phosphate d'un alcool en $C_{10}$ à $C_{16}$ qui est alkoxylé avec 4 à 10 motifs éthoxy, de préférence 4 à 8 motifs éthoxy.

5. Dispersion aqueuse selon la revendication 4, **caractérisée en ce que** ledit tensio-actif b) comprend un diester phosphate et de préférence un diester phosphate et un monoester phosphate dudit alcool.

6. Dispersion aqueuse selon l'une des revendications 1 à 5, **caractérisée en ce que** ledit tensio-actif b) est un mélange de monoester phosphate et de diester phosphate avec le rapport pondéral du monoester sur le diester phosphate étant de 0,8 à 1,2.

7. Dispersion aqueuse selon l'une des revendications 4 à 6, **caractérisée en ce que** ledit alcool est en $C_{12}$ à $C_{14}$, de préférence en $C_{13}$.

8. Dispersion selon la revendication 7, **caractérisée en ce que** le nombre desdits motifs alkoxy est de 4 à 8 et de préférence de 6 et plus préférentiellement lesdits motifs sont éthoxy.

9. Dispersion selon l'une des revendications 1 à 8, **caractérisée en ce que** le taux en poids dudit tensio-actif b) par rapport à ladite dispersion varie de 1 à 3%, de préférence de 1,5 à 2,5% et plus préférentiellement de 1,8 à 2,2%.

10. Dispersion selon l'une des revendications 1 à 9, **caractérisée en ce que** le taux en poids de ladite résine alkyde a) par rapport à ladite dispersion varie de 40 à 60%, plus préférentiellement de 45 à 55%.

11. Dispersion selon l'une des revendications 1 à 10, **caractérisée en ce que** ladite dispersion comprend en plus dudit tensio-actif b), un tensio-actif c) choisi parmi les tensio-actifs non ioniques, de préférence sélectionné parmi les tensio-actifs non ioniques polymères avec dans ce cas un rapport en poids entre tensio-actif anionique b) et tensio-actif non ionique c), b) / c) allant de 1 à 3, de préférence de 1,5 à 2,5.

12. Dispersion selon l'une des revendications 1 à 11, **caractérisée en ce que** ladite résine comprend dans son composant acide A au moins un diacide ou anhydride carboxylique aromatique a2) et en option un monoacide carboxylique aromatique a3) et dans son composant alcool B un polyol b1) de fonctionnalité allant de 3 à 6 et de préférence de 4.

13. Dispersion selon l'une des revendications 1 à 12, **caractérisée en ce que** ladite résine alkyde comprend en plus dans son composant acide gras a1) au moins un autre monoacide gras polyinsaturé non conjugué a12) ayant au moins deux insaturations par molécule et comprenant au moins 90% en poids d'un monoacide a121) polyinsaturé non conjugué, de préférence issu de l'huile de soja, de tournesol ou d'acides gras de tall.

14. Procédé de préparation d'une dispersion aqueuse telle que définie selon l'une des revendications 1 à 13, **caractérisé en ce qu'**il comprend les étapes successives suivantes :

i) Préparation de ladite résine alkyde a) en masse

ii) Mise à l'état fondu de ladite résine a)

iii) Addition dudit tensio-actif b) et éventuellement dudit tensio-actif non ionique c), comme défini selon la revendication 11,

iv) Addition partielle d'eau,

avant

v) Neutralisation de l'acidité de a) et de b) par une base, de préférence ladite base étant sélectionné parmi LiOH, KOH, NaOH, $NH_4OH$ et amines tertiaires

vi) Emulsification par inversion de phase avec ajustement de l'extrait sec après l'émulsification.

15. Procédé selon la revendication 14, **caractérisé en ce que** l'étape ii) et iii) sont réalisées à une température allant de 80 à 100°C, l'étape iv) à une température allant de 80 à 65°C, l'étape v) à une température allant de 60 à 70°C et l'étape vi) à une température allant de 55 à 65°C.

16. Composition de revêtement **caractérisée en ce qu'**elle comprend au moins une dispersion aqueuse telle que définie selon l'une des revendications 1 à 13 ou dispersion obtenue par le procédé tel que défini selon la revendication 14 ou 15.

17. Composition selon la revendication 16, **caractérisée en ce qu'**il s'agit d'une composition aqueuse de revêtements décoratifs, de préférence de peinture, vernis ou lasure, en particulier d'une composition de peinture aqueuse.

18. Utilisation de la dispersion aqueuse telle que définie selon l'une des revendications 1 à 13 ou dispersion obtenue par le procédé tel que défini selon la revendication 14 ou 15, en tant que liant aqueux pour des compositions aqueuses de revêtements, de préférence revêtements décoratifs et plus préférentiellement pour peintures, vernis ou lasures, encore plus préférentiellement pour peintures, vernis ou lasures de finition et plus particulièrement de finition intérieure ou extérieure pour bois, métal, mural ou plastique.

19. Utilisation selon la revendication 18, **caractérisée en ce qu'**il s'agit de peintures ayant pour une CPV (concentration pigmentaire volumique) de 18% et un agent siccatif à base de fer, une résistance au blocking inférieur à 2 selon méthode décrite au point 8 de « Tests et méthodes utilisés » de la description, un développement de dureté Persoz après 14 jours d'au moins 100 s selon méthode ISO 1522 et une résistance au jaunissement selon ASTM 31396 inférieure à 2 après1 mois d'exposition à température ambiante et un brillant à 20° après 24 h supérieur à 93% selon méthode ISO 2813.

20. Revêtement, de préférence revêtement de peinture, de vernis ou de lasure, **caractérisé en ce qu'**il résulte de l'utilisation d'au moins une dispersion aqueuse telle que définie selon l'une des revendications 1 à 13 ou dispersion obtenue par un procédé tel que défini selon la revendication 14 ou 15.

**Patentansprüche**

1. Wässrige Alkydharzdispersion, **dadurch gekennzeichnet, dass** sie Folgendes umfasst:

   a) ein kurzöliges Alkydharz, das eine Noury-Viskosität bei 110 °C gemäß AFNOR XPT 51213 im Bereich von 7000 bis 13.000 mPa.s und vorzugsweise von 9000 bis 12.000 mPa.s aufweist und in seiner Fettsäurekomponente a1) mindestens eine mehrfach ungesättigte einbasige Fettsäure a11) mit mindestens zwei Ungesättigtheiten pro Molekül und einem Gewichtsgehalt an einbasiger Säure a111) mit konjugierten Ungesättigtheiten von mindestens 35 %, vorzugsweise mindestens 42 %, umfasst, wobei der Gewichtsgehalt der einbasigen Fettsäure a111), bezogen auf das Alkydharz, mindestens 5 %, vorzugsweise 5 bis 40 %, weiter bevorzugt 5 bis 35 %, beträgt,
   b) mindestens ein anionisches Phosphat-Tensid, insbesondere ein Phosphatalkylalkoxyester, wobei es sich spezieller bei dem Tensid b) um ein Gemisch von Phosphatmonoester und -diester handelt, wobei die Alkylgruppe eine $C_{10}$-$C_{16}$-Alkylgruppe ist und mit 4 bis 10 Alkoxy-Einheiten alkoxyliert ist, wobei die Alkoxy-Einheiten vorzugsweise aus Ethoxy- und/oder Propoxy-Einheiten ausgewählt sind und weiter bevorzugt Ethoxy-Einheiten sind;
   wobei der Gewichtsgehalt des Alkydharzes a), bezogen auf die Dispersion, von 35 bis 65 % variiert.

2. Wässrige Dispersion nach Anspruch 1, **dadurch gekennzeichnet, dass** es sich bei der einbasigen Fettsäure a11) um ein Dehydratisierungsprodukt von Ricinusöl handelt.

3. Wässrige Dispersion nach Anspruch 1 oder 2, **dadurch gekennzeichnet, dass** die Säurezahl des Harzes weniger als 25, vorzugsweise weniger als 15 und weiter bevorzugt weniger als 12 mg KOH/g beträgt.

4. Wässrige Dispersion nach einem der Ansprüche 1 bis 3, **dadurch gekennzeichnet, dass** es sich bei dem Tensid b) um einen Phosphatester eines $C_{10}$- bis $C_{16}$-Alkohols, der mit 4 bis 10 Ethoxy-Einheiten, vorzugsweise 4 bis 8 Ethoxy-Einheiten, alkoxyliert ist, handelt.

5. Wässrige Dispersion nach Anspruch 4, **dadurch gekennzeichnet, dass** das Tensid b) einen Phosphatdiester und vorzugsweise einen Phosphatdiester und einen Phosphatmonoester des Alkohols umfasst.

6. Wässrige Dispersion nach einem der Ansprüche 1 bis 5, **dadurch gekennzeichnet, dass** es sich bei dem Tensid b) um ein Gemisch von Phosphatmonoester und Phosphatdiester handelt, wobei das Gewichtsverhältnis von Phosphatmonoester zu Phosphatdiester 0,8 bis 1,2 beträgt.

7. Wässrige Dispersion nach einem der Ansprüche 4 bis 6, **dadurch gekennzeichnet, dass** es sich bei dem Alkohol um einen $C_{12}$- bis $C_{14}$-Alkohol, vorzugsweise einen $C_{13}$-Alkohol, handelt.

8. Dispersion nach Anspruch 7, **dadurch gekennzeichnet, dass** die Zahl der Alkoxy-Einheiten 4 bis 8 und vorzugweise 6 beträgt und es sich weiter bevorzugt bei den Einheiten um Ethoxy-Einheiten handelt.

9. Dispersion nach einem der Ansprüche 1 bis 8, **dadurch gekennzeichnet, dass** der Gewichtsgehalt des Tensids b), bezogen auf die Dispersion, von 1 bis 3 %, vorzugsweise von 1,5 bis 2,5 % und weiter bevorzugt von 1,8 bis 2,2 % variiert.

10. Dispersion nach einem der Ansprüche 1 bis 9, **dadurch gekennzeichnet, dass** der Gewichtsgehalt des Alkydharzes a), bezogen auf die Dispersion, von 40 bis 60 %, weiter bevorzugt von 45 bis 55 %, variiert.

11. Dispersion nach einem der Ansprüche 1 bis 10, **dadurch gekennzeichnet, dass** die Dispersion neben dem Tensid b) ein Tensid c) umfasst, das aus nichtionischen Tensiden und vorzugsweise aus polymeren nichtionischen Tensiden ausgewählt ist, wobei in diesem Fall das Gewichtsverhältnis zwischen anionischem Tensid b) und nichtionischem Tensid c), b)/c), im Bereich von 1 bis 3, vorzugsweise von 1,5 bis 2,5, liegt.

12. Dispersion nach einem der Ansprüche 1 bis 11, **dadurch gekennzeichnet, dass** das Harz in seiner Säurekomponente A mindestens eine aromatische Dicarbonsäure oder ein aromatisches Dicarbonsäureanhydrid a2) und gegebenenfalls eine einbasige aromatische Carbonsäure a3) und in seiner Alkoholkomponente B ein Polyol b1) mit einer Funktionalität im Bereich von 3 bis 6 und vorzugsweise von 4 umfasst.

13. Dispersion nach einem der Ansprüche 1 bis 12, **dadurch gekennzeichnet, dass** das Alkydharz außerdem in seiner Fettsäurekomponente a1) mindestens eine andere nicht konjugierte mehrfach ungesättigte einbasige Fettsäure a12) umfasst, die mindestens zwei Ungesättigtheiten pro Molekül aufweist und mindestens 90 Gew.-% einer nicht konjugierten mehrfach ungesättigten einbasigen Säure a121) umfasst, vorzugsweise aus Sojaöl, Sonnenblumenöl oder Tallölfettsäuren.

14. Verfahren zur Herstellung einer wässrigen Dispersion gemäß einem der Ansprüche 1 bis 13, **dadurch gekennzeichnet, dass** es die folgenden aufeinanderfolgenden Schritte umfasst:

    i) Herstellung des Alkydharzes a) in der Masse,
    ii) Schmelzen des Harzes a),
    iii) Zugabe des Tensids b) und gegebenenfalls des nichtionischen Tensids c) gemäß Anspruch 11,
    iv) teilweise Zugabe von Wasser, dann
    v) Neutralisation der Acidität von a) und b) mit einer Base, wobei die Base vorzugsweise aus LiOH, KOH, NaOH, $NH_4OH$ und tertiären Aminen ausgewählt wird,
    vi) Emulgierung durch Phaseninversion mit Einstellung des Feststoffgehalts nach der Emulgierung.

15. Verfahren nach Anspruch 14, **dadurch gekennzeichnet, dass** die Schritte ii) und iii) bei einer Temperatur im Bereich von 80 bis 100 °C durchgeführt werden, Schritt iv) bei einer Temperatur im Bereich von 80 bis 65 °C durchgeführt wird, Schritt v) bei einer Temperatur im Bereich von 60 bis 70 °C durchgeführt wird und Schritt vi) bei einer Temperatur im Bereich von 55 bis 65 °C durchgeführt wird.

16. Beschichtungszusammensetzung, **dadurch gekennzeichnet, dass** sie mindestens eine wässrige Dispersion gemäß einem der Ansprüche 1 bis 13 oder durch das Verfahren gemäß Anspruch 14 oder 15 erhaltene Dispersion umfasst.

17. Zusammensetzung nach Anspruch 16, **dadurch gekennzeichnet, dass** es sich um eine wässrige Zusammensetzung für dekorative Beschichtungen, vorzugsweise eine wässrige Anstrichmittel-, Klarlack- oder Lasurzusammensetzung, insbesondere eine wässrige Anstrichmittelzusammensetzung, handelt.

18. Verwendung der wässrigen Dispersion gemäß einem der Ansprüche 1 bis 13 oder durch das Verfahren gemäß Anspruch 14 oder 15 erhaltenene Dispersion als wässriges Bindemittel für wässrige Beschichtungszusammensetzungen, vorzugsweise für dekorative Beschichtungen und weiter bevorzugt für Anstrichmittel, Klarlacke oder Lasuren, noch weiter bevorzugt für Endanstrichmittel, -klarlacke oder -lasuren spezieller für Innen- oder Außen-Deckschichten für Holz, Metall, Wände oder Kunststoff.

19. Verwendung nach Anspruch 18, **dadurch gekennzeichnet, dass** es sich um Anstrichmittel mit einer Pigmentvolumenkonzentration (PVK) von 18 % und einem Trockenmittel auf Eisenbasis, einer Blockfestigkeit von weniger als 2 gemäß der unter Punkt 8 von "Verwendete Tests und Methoden" der Beschreibung, einer Persoz-Härte-Entwicklung nach 14 Tagen von mindestens 100 Sekunden gemäß ISO-Methode 1522 und einer Vergilbungsbeständigkeit gemäß ASTM 31396 von weniger als 2 nach 1 Monat Exposition bei Raumtemperatur und 20°-Glanz nach 24 h von mehr als 93 % gemäß ISO-Methode 2813 handelt.

20. Beschichtung, vorzugsweise Anstrichmittel-, Klarlack- oder Lasurbeschichtung, **dadurch gekennzeichnet, dass** sie sich aus der Verwendung mindestens einer wässrigen Dispersion gemäß einem der Ansprüche 1 bis 13 oder durch ein Verfahren gemäß Anspruch 14 oder 15 erhaltenen Dispersion ergibt.

**Claims**

1. Aqueous alkyd resin dispersion, **characterized in that** it comprises:

    a) a short oil alkyd resin having a Noury viscosity at 110°C according to AFNOR XPT 51213 ranging from 7000 to 13 000 mPa.s and preferably from 9000 to 12 000 mPa.s and comprising, in its fatty acid component a1), at least one polyunsaturated fatty monoacid a11) having at least two unsaturations per molecule and a content by weight of monoacid a111) having conjugated unsaturations of at least 35%, preferably of at least 42%, the content by weight of said fatty monoacid a111), with respect to said alkyd resin, being at least 5%, preferably from 5% to 40%, more preferably from 5% to 35%,
    b) at least one anionic phosphate surfactant, in particular a phosphate alkyl alkoxy ester, said surfactant b) more particularly being a mixture of phosphate monoester and diester, the alkyl group being a $C_{10}$ - $C_{16}$ alkyl group and being alkoxylated with 4 to 10 alkoxy units, said alkoxy units preferably being chosen from ethoxy and/or propoxy units, more preferably being ethoxy units;
    wherein the content by weight of said alkyd resin a) with respect to said dispersion varies from 35% to 65%.

2. Aqueous dispersion according to Claim 1, **characterized in that** said fatty monoacid a11) is a product of the dehydration of castor oil.

3. Aqueous dispersion according to Claim 1 or 2, **characterized in that** the acid number of said resin is less than 25, preferably less than 15 and more preferably less than 12 mg KOH/g.

4. Aqueous dispersion according to one of Claims 1 to 3, **characterized in that** said surfactant b) is a phosphate ester of a $C_{10}$ to $C_{16}$ alcohol which is alkoxylated with from 4 to 10 ethoxy units, preferably from 4 to 8 ethoxy units.

5. Aqueous dispersion according to Claim 4, **characterized in that** said surfactant b) comprises a phosphate diester and preferably a phosphate diester and a phosphate monoester of said alcohol.

6. Aqueous dispersion according to one of Claims 1 to 5, **characterized in that** said surfactant b) is a mixture of phosphate monoester and of phosphate diester with the ratio by weight of the phosphate monoester to the phosphate diester being from 0.8 to 1.2.

7. Aqueous dispersion according to one of Claims 4 to 6, **characterized in that** said alcohol is a $C_{12}$ to $C_{14}$ alcohol, preferably a $C_{13}$ alcohol.

8. Dispersion according to Claim 7, **characterized in that** the number of said alkoxy units is from 4 to 8 and preferably 6 and more preferably said units are ethoxy units.

9. Dispersion according to one of Claims 1 to 8, **characterized in that** the content by weight of said surfactant b) with respect to said dispersion varies from 1% to 3%, preferably from 1.5% to 2.5% and more preferably from 1.8% to 2.2%.

10. Dispersion according to one of Claims 1 to 9, **characterized in that** the content by weight of said alkyd resin a) with respect to said dispersion varies from 40% to 60% and more preferably from 45% to 55%.

11. Dispersion according to one of Claims 1 to 10, **characterized in that** said dispersion comprises, in addition to said surfactant b), a surfactant c) chosen from non-ionic surfactants, preferably selected from polymeric non-ionic surfactants, with, in this case, a ratio by weight of anionic surfactant b) to non-ionic surfactant c), b)/c), ranging from 1 to 3, preferably from 1.5 to 2.5.

12. Dispersion according to one of Claims 1 to 11, **characterized in that** said resin comprises, in its acid component A, at least one aromatic dicarboxylic acid or anhydride a2) and optionally an aromatic monocarboxylic acid a3) and, in its alcohol component B, a polyol b1) with a functionality ranging from 3 to 6 and preferably of 4.

13. Dispersion according to one of Claims 1 to 12, **characterized in that** said alkyd resin additionally comprises, in its fatty acid component a1), at least one other non-conjugated polyunsaturated fatty monoacid a12) having at least two unsaturations per molecule and comprising at least 90% by weight of a non-conjugated polyunsaturated monoacid a121), preferably resulting from soybean oil, sunflower oil or tall oil fatty acids.

14. Process for the preparation of an aqueous dispersion as defined in one of Claims 1 to 13, **characterized in that** it comprises the following successive stages:

    i) Preparation of said alkyd resin a) in bulk,
    ii) Melting said resin a),
    iii) Addition of said surfactant b) and optionally of said non-ionic surfactant c), as defined in Claim 11,
    iv) Partial addition of water,
    before
    v) Neutralization of the acidity of a) and of b) by a base, said base preferably being selected from LiOH, KOH, NaOH, $NH_4OH$ and tertiary amines,
    vi) Emulsification by phase inversion with adjustment of the solids content after the emulsification.

15. Process according to Claim 14, **characterized in that** stages ii) and iii) are carried out at a temperature ranging from 80 to 100°C, stage iv) at a temperature ranging from 80 to 65°C, stage v) at a temperature ranging from 60 to 70°C and stage vi) at a temperature ranging from 55 to 65°C.

16. Coating composition, **characterized in that** it comprises at least one aqueous dispersion as defined in one of Claims 1 to 13 or dispersion obtained by the process as defined in Claim 14 or 15.

17. Composition according to Claim 16, **characterized in that** it is an aqueous decorative coating composition, preferably an aqueous paint, varnish or stain composition, in particular an aqueous paint composition.

18. Use of the aqueous dispersion as defined in one of Claims 1 to 13 or dispersion obtained by the process as defined in Claim 14 or 15, as aqueous binder for aqueous coating compositions, preferably aqueous decorative coating compositions, and more preferably for paints, varnishes or stains, more preferably still for finishing paints, varnishes or stains and more particularly interior or exterior finishing paints, varnishes or stains for wood, metal, wall or plastic.

19. Use according to Claim 18, **characterized in that** it concerns paints having, for a PVC (pigment volume concentration) of 18% and an iron-based drying agent, a resistance to blocking of less than 2 according to the method described in point 8 of "Tests and methods used" of the description, a development of Persoz hardness after 14 days of at least 100 s according to the ISO 1522 method and a resistance to yellowing according to ASTM 31396 of less than 2 after 1 month of exposure at ambient temperature and a 20° gloss after 24 h of greater than 93% according to the ISO 2813 method.

20. Coating, preferably a paint, varnish or stain coating, **characterized in that** it results from the use of at least one aqueous dispersion as defined in one of Claims 1 to 13 or dispersion obtained by a process as defined in Claim 14 or 15.